# EUROPEAN PATENT SPECIFICATION

(11) **EP 1 731 227 B1**
(45) Date of publication and mention of the grant of the patent: **23.07.2014**
(21) Application number: 05400017.9
(22) Date of filing: 10.06.2005
(51) Int. Cl.: C03C 17/00, C03C 17/28

(54) **Scratch masking coating for glass containers**
Kratzer-maskierende Beschichtung für Glaskontainer
Revêtement masquant les rayures pour substrat de verre

(43) Date of publication of application: 13.12.2006
(73) Proprietor: ARKEMA INC., King of Prussia PA 19406 (US)
(72) Inventor: Siebenlist, Ronnie, 4380AB Kwadendamme Zeeland (NL); EISEN, Heinz, 45307 Essen (DE); HOEKMAN, Leendert, 4461 NM Goes Zeeland (NL)
(74) Representative: Delprat, Corinne

(56) References cited:
- EP-A- 0 470 442
- DE-A1- 2 941 105
- US-A- 4 792 494
- US-A- 4 834 950
- US-A- 5 346 544

## Description

### Filed of the Invention

The present invention relates to a method using oil in water emulsions for finishing or improving glass surfaces, particularly the external surfaces of glass containers. More particularly, the present invention relates to a scratch masking coating for glass bottles which enhances appearance.

### Background of The Invention

Glass articles such as returnable bottles are handled a great number of times during manufacture, inspection, filling, shipping, washing etc. During such handling the bottles come into contact with various mechanical devices such as conveyors, inspection devices and the like as well as contact with other glass bottles and surfaces such as boxes, shelves etc. This high degree of contact causes damage either by breakage, cracking, scratching or other defects of the surface.

The use of scratch or scuff masking agents on glass containers is known. Such masking agents desirably mask scuffs, and exhibit an acceptable durability and surface properties. Desirable properties for scuff masking agents include water resistance and durability while being non-toxic and removable in alkaline bottle washing operations. Coatings for glassware can comprise polymeric materials which cure after application to the bottle surface, either at room temperature or upon heating. For example, US Patent Number 4,273,834 discloses a specific organopolysiloxane and a curing catalyst which are applied to glass articles to mask abrasions. The material is cured on bottle surfaces at room temperature or under heating. US Patent Number 5,346,544 discloses triglyceride materials and fatty acid esters of isopropyl alcohol as a coating for glass containers which are emulsified in water, applied to glass bottles and dried at room temperature or with heating.

US Patents Numbers 4,792,494 and 4,834,950 disclose the use of modified polyethylene preferably in the form of an aqueous dispersion to form a protective coating on glass surfaces. The coating is typically applied at the end of a hot end finishing process whereby residual heat of the glass aids drying in a conventional cold end coating process.

US Patent Number 3,296,173 discloses a protective coating for glass comprising a reaction product of polyvinyl alcohol, an emulsified polyolefin and ammonium chloride. The coating is applied and heated whereby the composition reacts to produce a durable coating.

The variety of designs for glass bottle handling, cleaning and filling operations results in a limitations on the applicability of prior art coating methods. Protective coatings are applied to glass containers during manufacture in either a hot end process and/or cold end process. In single use glass containers, such protective coatings are sufficient to protect against scuffing during the life of the container. With returnable glass containers, which can be washed and refilled 20 to 60 times, the "production applied' coatings are washed off and protection is lost. As the number of return cycles increases, so does scuffing which results in an undesirable appearance. In order to provide a better appearance, returned bottles are treated with an anti-scuff coating during each wash/refill cycle. Coating systems that rely on heat to cure or dry an applied coating are not effective on lines where the glass bottles are cool. With some coatings, long cure times due to moisture such as from condensation can adversely impact a coating system. Aqueous emulsion based coating systems often rely on emulsion destabilization or breaking due to water phase evaporation. Other systems rely on emulsion destabilization based upon emulsifier concentration. Moisture on the bottles such as from condensation can adversely impact such systems. In emulsion based coating systems, instability of the emulsion on the glass surface is desired such that the emulsion breaks and the oil phase coating is deposited on the glass surface. However, stability of the emulsion during shipping and handling such as in the application equipment is desired. Prior systems relied upon evaporation of the water phase or emulsifier concentration to break the emulsion and deposit the coating onto the glass surface.

### Summary of The Invention

The present invention provides a coating system for glass containers such as bottles that is adaptable to a variety of bottle surface and application conditions. The coating of the present invention is applied as an oil in water emulsion wherein the oil phase is the masking coating. Application as an oil in water emulsion provides flexibility in handling and application techniques while minimizing handling problems. In the present invention, an oil in water emulsion is treated so that the emulsion is destabilized or broken in an easily controlled manner. Destabilization or breaking of the emulsion results in the oil phase, masking coating being applied to the glass surface to be treated. The destabilization or breaking is instigated by the addition of an emulsion breaker to the emulsion in sufficient quantity to provide the desired emulsion break at the desired time. The emulsion breaker can be added to the emulsion shortly before application to the glass surface or applied to the glass surface as a separate solution. When added to the emulsion, sufficient emulsion breaker is added prior to application of the emulsion to the glass surface to ensure breaking of the emulsion occurs after application to the glass surface. As an alternative, heat may be used to instigate breaking of the emulsion. Heat, such as provided by heating of the emulsion flow lines and/or application nozzles may provide sufficient emulsion instability to result in breaking of the emulsion on the glass surface.

By minimizing the time between application to the surface and breaking of the emulsion, coating application efficacy is enhanced. In addition, unique and/or variable operating conditions can be easily adapted to by altering the amount of destabilizer or emulsion breaker added to, or heat applied to the emulsion. By varying the amount of destabilizer or emulsion breaker added to the emulsion, it is possible to control the timing of the breaking of the emulsion.

When applied as a separate solution, the emulsion breaker can be applied prior to, at the same time as, or subsequent to the application of the emulsion. Interaction of the emulsion and the emulsion breaker on the surface to be treated results in breaking or destabilization of the emulsion and application of the treatment to the surface. The method of the present invention can be employed in a variety of bottle handling operations, hot as well as cold application temperatures, as well as be adapted to changing conditions such as make up water variations or changes in condensation causing humidity.

### Detailed Description of The Invention

The present invention is directed to a method of applying a coating to a glass container surface. The coating provides for masking of scratches and abrasions on the glass container surface which adversely impact its commercial value. For examples, scratches or abrasions on glass bottles, especially on returnable glass bottles used for beverages, result in an undesirable haze or white appearance which decreases the value of the bottle. The method of the present invention provides a coating for glass containers that masks such scratches or abrasions. In addition, the coating can enhance the lubricity of the container surface. The coating of the present invention is applied in the form of an oil in water emulsion that may be applied via spay application, dipping or a contact method. Spray application is the preferred method of application. In the oil in water emulsion of the present invention, the oil phase comprises the coating treatment for the glass surface. In accordance with the present invention, the oil in water emulsion is treated with so as to destabilize or break on the glass surface thereby providing greater control of the treatment application process. The emulsion can be destabilized via heating of the emulsion, or preferably via addition of an emulsion destabilizer or breaker to the emulsion at a time and in an amount sufficient to destabilize or break the emulsion on the glass surface, preferably very soon after application.

The oil in water emulsion of the present invention comprises a water continuous phase having dispersed or emulsified therein an oil phase. The emulsion is typically prepared by mixing an oil phase containing emulsifiers with a water phase. The oil phase and emulsifier can be supplied as a concentrate to be mixed with water by the end user to form the treatment emulsion or supplied as a ready to use emulsion. The preferred concentration of the oil phase in the as applied emulsion is from about 3% to 20% by weight, preferable from about 6% to 10% by weight. Variations in water quality such as pH or hardness can impact the quality and stability of the final, treatment emulsion when supplied as a concentrate for mixing with "local" water. It is often necessary to modify the oil phase or emulsifier concentration to account for such variations. In order to ensure that the emulsion is sufficiently stable for easy handling and application, "excess" emulsifier is often added. In order to allow for efficient deposition of the oil phased coating on the glass surface, it is necessary to destabilize or break the emulsion after it is applied to the glass surface. In a typical cold end coating process, this is accomplished by heating the glass or applying the emulsion to a hot glass surface. The evaporation of water changes the emulsion stability such that the emulsion breaks and the oil phase is deposited on the glass surface. Attempts have been made to alter the emulsifier loading in the concentrate to provide an emulsion of limited stability. Such adjustment is difficult because of variations in water quality as well as variations in the application process. Furthermore, variations in system processing conditions can occur quickly. For example, the formation of condensation on cold bottles can result in variation in the emulsion properties such that control of breaking of the emulsion is difficult. The formation of condensation can vary widely with local conditions making process control difficult.

The present invention provides for control of the emulsion destabilization or breaking. The emulsion breaking or destabilization can be provided via the addition of an emulsion destabilizer to the emulsion or by heating of the emulsion. The preferred method is the addition of an emulsion destabilizer. The destabilizer can be added to the emulsion prior to application to the glass surface or applied to the glass surface independently. When applied to the glass surface independently, the emulsion breaker or destabilizer can be applied prior to, at the same time as or subsequent to the application of the emulsion. By adding the emulsion breaker or destabilizer to the emulsion shortly before applying the emulsion to the glass surface, control of emulsion breaking can be quickly and easily adapted to take into account changing conditions. The amount or concentration of the emulsion breaker or destabilizer can be varied to account for variations in the process conditions. Similarly, applying the emulsion breaker to the glass surface as a separate solution allows for adjustment of the emulsion breaking action to take into account changes in process conditions. Furthermore, this allows the emulsion concentrate or emulsion dilution awaiting use to be prepared with sufficient emulsifier to ensure that instability does not occur prior to application to the glass surface.

The oil in water emulsion of the present invention comprises a masking agent, oil or polymer discontinuous phase in an aqueous or water continuous phase. The oil or polymer can comprise polyolefines such as paraffin oils or fatty acid esters of up to 40 carbon atoms. The masking agent can be supplied as an aqueous emulsion, which can be directly applied, or as a concentrated mixture of masking oil and emulsifiers that is mixed with water prior to application. The emulsifiers can be non-ionic, anionic or cationic. Typical non-ionic emulsifiers include, but are not limited to ethoxylated alcohols such as oleyl- or stearyl- alcohol ethoxylates; ethoxylated acids including but not limited to oleic acid and palmtic acid; ethoxylated esters include but are not limited to sorbitane and glycerol- or other poly-ol carboxylates. Typical emulsifiers include but are not limited to fatty acid salts such as sodium or ammonium oleate. Typical cationic emulsifiers include but are not limited to C12 to C18 amines with ethylene oxide acetates or other salts. Other additive such as bactericides can also be included. The concentration of masking agent preferably ranges from about 3 to 15% by weight of the final working emulsion. The application equipment typically includes mixing and storage vessels, pumps, transfer lines and spray apparatus and control and monitoring equipment. The emulsifiers present in the working solution provide sufficient stability through the application apparatus to maintain the stability of the emulsion.

An emulsion destabilizer or breaker is used to destabilize or break the emulsion in a controlled manner. The emulsion destabilizer or breaker can be added to or mixed with the emulsion shortly prior to application of the emulsion to the glass surface. Alternatively, an emulsion destabilizer or breaker can be applied to the glass surface to be treated prior to, at the same time as or subsequent to application of the emulsion. Emulsion stability is pH dependent and an emulsion destabilizer or breaker can comprise an additive which modifies the pH sufficiently to destabilize or break the emulsion. For example, the emulsion destabilizer or breaker can comprise an acid including but not limited to organic acids such as citric acid, lactic acid, acetic acid or inorganic acids including but not limited to hydrochloric acid, sulfuric acid or mixture of such acids. The emulsion destabilizer or breaker can alternatively comprise a polyvalent ionic material which will provide pH control such as salts of calcium, iron, sodium, magnesium or mixtures thereof. Preferably the emulsion destabilizer or breaker is an acid. The quantity of emulsion destabilizer or breaker used is that amount that provides for destabilization or breaking of the emulsion after the emulsion has been applied to the glass surface.

Adding the emulsion destabilizer or breaker to the stabile emulsion shortly prior to application to the glass surface allows for adjustment in the amount of destabilizer used. This allows the time period to actual breaking of the emulsion to be adjusted and adapted to account for varying process conditions such as changes in humidity, changes in the water etc. In addition, this allows the emulsion to be prepared, stored and handled in a stable form to avoid adverse impact on the mixing, storage or application equipment. Appling the destabilizer as an independent solution prior to, at essentially the same time as or subsequent to the application of the emulsion to the glass surface allows variation in the amount of destabilizer added so as to control the timing of the breaking of the emulsion. The method of the present invention provides for enhanced control of emulsion based glass surface masking coatings that is applicable in many types of application systems, such as those where the glass containers are warm as well as those were the glass containers are cold.

### Examples

The present invention is illustrated in more detail in the following non-limiting examples. Testing was undertaken with a commercial glass masking product, Opticoat^{®} 140 which was mixed with water to form an emulsion of 6-8% of oil in water (Opticoat 140 is mixture of an ethoxylated fatty acid ester, an ester oil and a ethoxylated alcohol available from Arkema Inc. of Philadelphia, PA) and an acidic emulsion breaker, citric acid, to evaluate the impact of the emulsion breaker on the coating deposited on glass bottles. The efficiency of coating deposition was evaluated by applying the coating to glass bottles, drying the coating and rinsing the coating material from the bottle with acetone into a small receiver cup and re-weighing the cup after evaporation of the acetone. This provides an applied coating weight result, which is a measure of the masking performance. The applications conditions were standardized as follows:
- Glass bottles at 8° C, dry at start of application.
- 6% Opticoat^{®} 140 in water, hardness dH2°.
- Apply Opticoat^{®} 140 via spray at an emulsion flow of 0.4 ml/sec for 1 second, on a rotating bottle.
- Citric acid stock solution of 120 g/liter was used in varying concentration.
- Directly after application of Opticoat the bottle was conditioned for 1 hour at greater than 90% relative humidity at 22°-26° and subsequently dried at ambient conditions.

### Example 1

Testing at the above conditions was undertaken by adding varying amounts of citric acid stock solution (ml) to Opticoat 140 emulsion (1 liter) and subsequently applying the emulsion to glass bottle to evaluate the impact of the citric acid on coating weight. Table 1 summarizes the results.

**Table 1. Results adding citric acid to Opticoat emulsion**

| **Entry** | **Citric acid** | **Amount of Opticoat 140 on bottle** |
|---|---|---|
| | ml | mg |
| **1** | 0 | 5.3 |
| **2** | 0.5 | 7.0 |
| **3** | 1.0 | 11.4 |
| **4** | 2.0 | 14.3 |
| **5** | 4.0 | 14.4 |
| **6** | 8.0 | 15.0 |

Table 1 shows that the addition of citric acid to the Opticoat 140 increases the amount of treatment deposited on the bottle surface.

### Example 2

Experiments were conducted under conditions as set forth in Example 1, to evaluate the spray application of citric acid at varying amounts (ml of stock solution in 1 liter of water) as an independent spray just before and just after application of the Opticoat 140 emulsion to the bottle surfaces. Table 2 summarizes the results.

**Table 2. Results spraying citric acid before or after application of Opticoat 140**

| **Entry** | **Citric acid on bottle** | **Spray before or after Opticoat application** | **Amount of Opticoat on bottle (mg)** | | | | | | | |
|---|---|---|---|---|---|---|---|---|---|---|
| | ml | ***Conc. citric acid (ml*/*l) →*** | ***0*** | ***0.5*** | ***1.0*** | ***2.0*** | ***4.0*** | ***8.0*** | ***16.0*** | ***32.0*** |
| **7** | 0.4 | before | 2.5 | 2.1 | 2.5 | 4.7 | 5.5 | 6.1 | | |
| **8** | 0.4 | after | 2.6 | 2.5 | 2.6 | 4.6 | 5.8 | 5.7 | | |
| **9** | 0.3 | before | 2.8 | | | 6.3 | 7.3 | 8.6 | 7.2 | 6.9 |
| **10** | 0.3 | after | 2.7 | | | 6.2 | 8.7 | 7.1 | 6.6 | 7.1 |
| **11** | 0.2 | before | 3.5 | 3.8 | 4.5 | 6.9 | 8.7 | 10 | | |
| **12** | 0.2 | before | 3.5 | - | - | - | 9.5 | 10.8 | 11.0 | 11.5 |
| **13** | 0.2 | after | 3.7 | 4.5 | 5.0 | 7.3 | 9.6 | 10.5 | | |
| **14** | 0.2 | after | 3.5 | - | - | - | 10.3 | 10.3 | 10.0 | 9.5 |

Table 2 shows that the amount of Opticoat 140 applied to the bottle can be increased by applying citric acid as an independent spray just before or just after application of the Opticoat 140 emulsion to the bottle surface.

### Example 3

The ability of acids, salts and bases to break or destabilize bottle coating emulsion was evaluated. Citric acid, acetic acid, sulphuric acid, sodium chloride and ammonia were evaluated for their impact on the stability of bottle masking emulsions. Varying weight percentages of the emulsion breaker or destabilizer were added to an emulsion of 10 weight percent bottle coating agents in water. The volume percent of the oil layer was measured over time to evaluate the ability of the treatment to break the emulsion. The bottle coating composition tested was Opticoat 140. Tables 1 though 5 summarize the test results. Where the effect was negligible, testing was terminated as indicated by the lack of an entry in the tables. In the Table dH refers to degrees of hardness measured in accordance with German standards.

**Table 1: Volume Percent Organic Layer. Opticoat 140 10% wt in water, dH 2, 1 gram sulphuric acid added per 100 grams Opticoat solution**

| | 500 ppm Sulphuric acid | 250 ppm Sulphuric acid | 100 ppm Sulphuric acid | 50 ppm Sulphuric acid | 25 ppm Sulphuric acid | 10 ppm Sulphuric acid | 0 ppm Sulphuric acid |
|---|---|---|---|---|---|---|---|
| Minutes | | | | | | | |
| 0 | 0 | 0 | 0 | 0 | 0 | 0 | 0 |
| 5 | 15 | | 15 | 18 | 1 | 1 | 1 |
| 10 | 15 | | 15 | 15 | 2 | 2 | 3 |
| 15 | 15 | | 15 | 15 | 3 | 3 | 3 |
| 30 | 15 | | 15 | 15 | 6 | 6 | 6 |
| 60 | 15 | | 15 | 15 | 6 | 6 | 9 |

**Table 2: Volume Percent Organic Layer. Opticoat 140 10% wt in water, dH 2, 1 gram sodium chloride added per 100 grams Opticoat solution**

| | 500 ppm sodium chloride | 250 ppm sodium chloride | 100 ppm sodium chloride | 50 ppm sodium chloride | 25 ppm sodium chloride | 10 ppm sodium chloride | 0 ppm sodium chloride |
|---|---|---|---|---|---|---|---|
| Minutes | | | | | | | |
| 0 | 0 | 0 | 0 | 0 | 0 | 0 | 0 |
| 5 | 8 | 1 | 1 | | | | 1 |
| 10 | 13 | 3 | 3 | | | | 3 |
| 15 | 13 | 4 | 5 | | | | 3 |
| 30 | 12 | 6 | 6 | | | | 6 |
| 60 | 12 | 8 | 9 | | | | 9 |

**Table 3: Volume Percent Organic Layer. Opticoat 140 10% wt in water, dH 2, 1 gram acetic acid added per 100 grams Opticoat solution**

| | 500 ppm acetic acid | 250 ppm acetic acid | 100 ppm acetic acid | 50 ppm acetic acid | 25 ppm acetic acid | 10 ppm acetic acid | 0 ppm acetic acid |
|---|---|---|---|---|---|---|---|
| Minutes | | | | | | | |
| 0 | 0 | 0 | 0 | 0 | 0 | 0 | 0 |
| 5 | | 13 | 15 | 2 | 1 | | 1 |
| 10 | | 13 | 14 | 3 | 2 | | 3 |
| 15 | | 13 | 14 | 5 | 3 | | 3 |
| 30 | | 13 | 13 | 8 | 6 | | 6 |
| 60 | | 13 | 13 | 10 | 8 | | 9 |

**Table 4: Volume Percent Organic Layer. Opticoat 140 10% wt in water, dH 2, 1 gram citric acid added per 100 grams Opticoat solution**

| | 500 ppm citric acid | 250 ppm citric acid | 100 ppm citric acid | 50 ppm citric acid | 25 ppm citric acid | 10 ppm citric acid | 0 ppm citric acid |
|---|---|---|---|---|---|---|---|
| Minutes | | | | | | | |
| 0 | 0 | 0 | 0 | 0 | 0 | 0 | 0 |
| 5 | | 16 | 2 | 1 | 1 | | 1 |
| 10 | | 14 | 3 | 2 | 2 | | 3 |
| 15 | | 13 | 5 | 4 | 4 | | 3 |
| 30 | | 13 | 6 | 6 | 6 | | 6 |
| 60 | | 13 | 9 | 9 | 9 | | 9 |

**Table 5: Volume Percent Organic Layer. Opticoat 140 10% wt in water, dH 2, 1 gram ammonia solution added per 100 grams Opticoat solution**

| | 500 ppm ammonia solution | 250 ppm ammonia solution | 100 ppm ammonia solution | 50 ppm ammonia solution | 25 ppm ammonia solution | 10 ppm ammonia solution | 0 ppm ammonia solution |
|---|---|---|---|---|---|---|---|
| Minutes | | | | | | | |
| 0 | 0 | 0 | 0 | 0 | 0 | 0 | 0 |
| 5 | 1 | 1 | 1 | 1 | 1 | | 1 |
| 10 | 1 | 1 | 1 | 1 | 1 | | 3 |
| 15 | 1 | 1 | 1 | 1 | 1 | | 3 |
| 30 | 3 | 2 | 2 | 2 | 4 | | 6 |
| 60 | 6 | 3 | 3 | 5 | 9 | | 9 |

The data in tables 1 through 5 shows the impact of varying the amount and type of emulsion breaker or destabilizer on the stability of bottle coating, oil in water emulsions.

While the present invention has been described with respect to particular embodiments thereof, it is apparent that numerous other forms and modifications of the invention will be obvious to those skilled in the art. The appended claims and this invention generally should be construed to cover all such obvious forms and modifications which are within the scope of the appended claims.

## Claims

1. A method of forming a scratch masking coating on a glass surface comprising:
applying to the glass surface a scratch masking emulsion comprising an oil in water emulsion or dispersion of an oil in water; and
mixing a sufficient amount of an emulsion destabilizer with said scratch masking emulsion, whereby said oil in water emulsion or dispersion is destabilized after contacting said glass surface.

2. The method of claim 1 wherein said mixing occurs prior to application of the scratch masking composition.

3. The method of claim 1 wherein said mixing occurs on the glass surface.

4. The method of claim 3 wherein said emulsion destabilizer is applied to the glass surface prior to application of the scratch masking composition.

5. The method of claim 3 wherein said emulsion destabilizer is applied to the glass surface essentially simultaneously with said scratch masking composition.

6. The method of claim3 wherein said emulsion destabilizer is applied to the glass surface after application of the scratch masking composition.

7. The method of claim 1 wherein said scratch masking coating is applied via spraying, dipping or a contact application means.

8. The method of claim 1 wherein said emulsion destabilizer is selected from the group consisting of acids and polyvalent ionic materials.

9. The method of claim 8 wherein said acid is select from the group citric acid, lactic acid, hydrochloric acid, sulfuric acid and mixtures thereof

10. The method of claim 8 wherein said polyvalent ionic materials is selected from the group consisting of salts of calcium, iron, sodium, magnesium or mixtures thereof.

11. The method of claim 1 wherein said scratch masking emulsion further includes compounds selected from the group consisting of biocides, emulsion stabilizers and mixtures thereof.

12. A scratch masking composition for depositing a scratch masking coating on a glass surfaces comprising
a scratch masking emulsion comprising an oil phase in a water continuous phase;
an emulsion destabilizer composition , comprising an acid or a polyvalent ionic material.

13. The composition of claim 12 wherein said emulsion destabilizer is selected from the group consisting of acids and polyvalent ionic materials.

14. The composition of claim 12 wherein said acid is select from the group citric acid, lactic acid, hydrochloric acid, sulfuric acid and mixtures thereof.

15. The composition of claim 12 wherein said polyvalent ionic materials is selected from the group consisting of salts of calcium, iron, sodium, magnesium or mixtures thereof.

16. The composition of claim 12 further includes compounds selected from the group consisting of biocides, emulsion stabilizers and mixtures thereof.

## Patentansprüche

1. Verfahren zur Bildung einer Kratzermaskierungsbeschichtung auf einer Glasoberfläche, umfassend:
Aufbringen einer Kratzermaskierungsemulsion, die eine Öl-in-Wasser-Emulsion oder eine Dispersion eines Öls in Wasser umfasst, auf die Glasoberfläche und
Mischen einer ausreichenden Menge eines Emulsionsdestabilisators mit der Kratzermaskierungsemulsion, wodurch die Öl-in-Wasser-Emulsion oder -Dispersion nach Kontaktierung der Glasoberfläche destabilisiert wird.

2. Verfahren nach Anspruch 1, bei dem das Mischen vor dem Aufbringen der Kratzermaskierungszusammensetzung erfolgt.

3. Verfahren nach Anspruch 1, bei dem das Mischen auf der Glasoberfläche erfolgt.

4. Verfahren nach Anspruch 3, bei dem der Emulsionsdestabilisator vor dem Aufbringen der Kratzermaskierungszusammensetzung auf die Glasoberfläche aufgebracht wird.

5. Verfahren nach Anspruch 3, bei dem der Emulsionsdestabilisator im Wesentlichen gleichzeitig mit der Kratzermaskierungszusammensetzung auf die Glasoberfläche aufgebracht wird.

6. Verfahren nach Anspruch 3, bei dem der Emulsionsdestabilisator nach dem Aufbringen der Kratzermaskierungszusammensetzung auf die Glasoberfläche aufgebracht wird.

7. Verfahren nach Anspruch 1, bei dem die Kratzermaskierungsbeschichtung mittels Spritzen, Tauchen oder einer Kontaktapplikationseinrichtung aufgebracht wird.

8. Verfahren nach Anspruch 1, bei dem der Emulsionsdestabilisator aus der Gruppe bestehend aus Säuren und mehrwertigen ionischen Substanzen ausgewählt wird.

9. Verfahren nach Anspruch 8, bei dem die Säure aus der Gruppe Citronensäure, Milchsäure, Salzsäure, Schwefelsäure und Mischungen davon ausgewählt wird.

10. Verfahren nach Anspruch 8, bei dem die mehrwertigen ionischen Substanzen aus der Gruppe bestehend aus Salzen von Calcium, Eisen, Natrium, Magnesium oder Mischungen davon ausgewählt werden.

11. Verfahren nach Anspruch 1, bei dem die Kratzermaskierungsemulsion ferner Verbindungen aus der Gruppe bestehend aus Bioziden, Emulsionsstabilisatoren und Mischungen davon enthält.

12. Kratzermaskierungszusammensetzung zum Abscheiden einer Kratzermaskierungsbeschichtung auf einer Glasoberfläche, umfassend
eine Kratzermaskierungsemulsion, die eine Ölphase in einer kontinuierlichen Wasserphase umfasst; eine Emulsionsdestabilisatorzusammensetzung, die eine Säure oder eine mehrwertige ionische Substanz umfasst.

13. Zusammensetzung nach Anspruch 12, wobei der Emulsionsdestabilisator aus der Gruppe bestehend aus Säuren und mehrwertigen ionischen Substanzen ausgewählt ist.

14. Zusammensetzung nach Anspruch 12, wobei die Säure aus der Gruppe Citronensäure, Milchsäure, Salzsäure, Schwefelsäure und Mischungen davon ausgewählt ist.

15. Zusammensetzung nach Anspruch 12, wobei die mehrwertigen ionischen Substanzen aus der Gruppe bestehend aus Salzen von Calcium, Eisen, Natrium, Magnesium oder Mischungen davon ausgewählt sind.

16. Zusammensetzung nach Anspruch 12, die ferner Verbindungen aus der Gruppe bestehend aus Bioziden, Emulsionsstabilisatoren und Mischungen davon enthält.

## Revendications

1. Méthode de formation d'un revêtement de masquage de rayures sur une surface en verre, comprenant :
l'application à la surface du verre d'une émulsion de masquage de rayures comprenant une émulsion huile-dans-eau ou une dispersion d'une huile dans de l'eau ; et
le mélange d'une quantité suffisante d'un déstabilisateur d'émulsion avec ladite émulsion de masquage de rayures, ce par quoi ladite dispersion ou émulsion huile-dans-eau est déstabilisée après l'entrée en contact avec ladite surface en verre.

2. Méthode selon la revendication 1, dans laquelle ledit mélange a lieu préalablement à l'application de la composition de masquage de rayures.

3. Méthode selon la revendication 1, dans laquelle ledit mélange a lieu à la surface du verre.

4. Méthode selon la revendication 3, dans laquelle ledit déstabilisateur d'émulsion est appliqué à la surface du verre préalablement à l'application de la composition de masquage de rayures.

5. Méthode selon la revendication 3, dans laquelle ledit déstabilisateur d'émulsion est appliqué à la surface du verre de manière sensiblement simultanée avec ladite composition de masquage de rayures.

6. Méthode selon la revendication 3, dans laquelle ledit déstabilisateur d'émulsion est appliqué à la surface du verre après l'application de la composition de masquage de rayures.

7. Méthode selon la revendication 1, dans laquelle ledit revêtement de masquage de rayures est appliqué par pulvérisation, trempage ou un moyen d'application par contact.

8. Méthode selon la revendication 1, dans laquelle ledit déstabilisateur d'émulsion est choisi dans le groupe constitué par les acides et un matériau ionique polyvalent.

9. Méthode selon la revendication 8, dans laquelle ledit acide est choisi dans le groupe constitué par l'acide citrique, l'acide lactique, l'acide chlorhydrique, l'acide sulfurique, et des mélanges de ceux-ci.

10. Méthode selon la revendication 8, dans laquelle ledit matériau ionique polyvalent est choisi dans le groupe constitué par les sels de calcium, de fer, de sodium, de magnésium, ou des mélanges de ceux-ci.

11. Méthode selon la revendication 1, dans laquelle ladite émulsion de masquage de rayures comporte en outre des composés choisis dans le groupe constitué par les biocides, les stabilisants d'émulsion, et des mélanges de ceux-ci.

12. Composition de masquage de rayures destinée à déposer un revêtement de masquage de rayures sur une surface en verre, comprenant
une émulsion de masquage de rayures, comprenant une phase d'huile dans une phase d'eau continue ;
une composition de déstabilisateur d'émulsion, comprenant un acide ou un matériau ionique polyvalent.

13. Composition selon la revendication 12, dans laquelle ledit déstabilisateur d'émulsion est choisi dans le groupe constitué par les acides et un matériau ionique polyvalent.

14. Composition selon la revendication 12, dans laquelle ledit acide est choisi dans le groupe constitué par l'acide citrique, l'acide lactique, l'acide chlorhydrique, l'acide sulfurique, et des mélanges de ceux-ci.

15. Composition selon la revendication 12, dans laquelle ledit matériau ionique polyvalent est choisi dans le groupe constitué par les sels de calcium, de fer, de sodium, de magnésium, ou des mélanges de ceux-ci.

16. Composition selon la revendication 12, comportant en outre des composés choisis dans le groupe constitué par les biocides, les stabilisants d'émulsion, et des mélanges de ceux-ci.
